# EUROPÄISCHE PATENTSCHRIFT

(11) **EP 1 278 352 B1**
(45) Veröffentlichungstag und Bekanntmachung des Hinweises auf die Patenterteilung: **12.09.2007**
(21) Anmeldenummer: 02016028.9
(22) Anmeldetag: 18.07.2002
(51) Int. Cl.: H04L 29/06

(54) **Verfahren zum Betrieb einer IP-Telekommunikationsanlage und IP-Telekommunikationsanlage**
IP Telecomms Equipment and Method for Operating
Système de télécommunication sur IP et méthode d'operation

(30) Priorität: 18.07.2001 DE 10134925
(43) Veröffentlichungstag der Anmeldung: 22.01.2003
(73) Patentinhaber: Tenovis GmbH & Co. KG, 60326 Frankfurt (DE)
(72) Erfinder: Sölch, Björn, 60487 Frankfurt (DE); Niebuhr, Axel, 65719 Hofheim-Lorsbach (DE)
(74) Vertreter: Walkenhorst, Andreas

(56) Entgegenhaltungen:
- EP-A- 0 966 145
- WO-A-01/37501
- WO-A-99/20032
- US-A- 5 940 479

## Beschreibung

Die Erfindung betrifft ein Verfahren zum Betrieb einer Telekommunikationsanlage für die IP-Telefonie sowie eine IP-Telekommunikationsanlage.

Telekommunikationsanlagen für die IP-Telefonie und Betriebsverfahren für solche sind aus dem Stand der Technik bekannt und werden in Netzen, wie LAN's (Local Area Networks), WAN's (Wide Area Networks), DFÜ(Datenfernübertragungs)-Netzen usw. zur Sprach- und Nutzdatenübertragung (Voice, Streaming Audio, Streaming Video) eingesetzt. Die Funktionsweise der IP-Telefonie beruht auf der Technologie des Internet-Protokolls, einem Protokoll der TCP/IP-Familie auf Schicht 3 des OSI-Referenzmodells, bei dem jedem an ein Rechnernetz angeschlossenen Endgerät (Rechner, Drucker, Scanner, usw.), das mit der IP-Telefonanlage optional verbunden sein kann, eine eindeutige Adresse zugeordnet wird, über welche das entsprechende Endgerät an dieses adressierte Nachrichten auf dem Netz erkennt.

IP-Telefonie im engeren Sinne bedeutet dabei, daß Sprache von einem Mikrofon und Lautsprecher ausgestatteten Rechner zu einem anderen übertragen wird. Bei dieser Lösung ist der Rechner über das herkömmliche leitungsvermittelte, öffentliche Netz mit einem Internet-Serviceprovider verbunden, von wo aus er im Paket vermittelnden Internet Sprachnachrichten übertragen kann. Endgeräte für die IP-Telefonie sind aber auch speziell ausgestattete Telefone, welche mit der IP-Telefonanlage verbunden sind und wie herkömmliche Telefone bedient werden. Die Telefone können direkt über das Internet oder ein Intranet Sprach- und Nutzdaten (z. B. als Bildtelefon zusätzlich Bilddaten) austauschen. Diese Technologie wird auch als Voice-Over-IP-Net bezeichnet.

Um in der IP-Telefonie als Benutzer eines Endgerätes Aufschluß darüber zu bekommen, ob ein Benutzer eines anderen Gerätes momentan über IP-Telefonverbindungen erreichbar ist, startet der Benutzer üblicherweise den Vorgang einer Registrierungsabfrage an einen bestimmten Nachrichten-Server, bei dem sich die Benutzer mit ihren Endgeräten registrieren lassen können. Der Nachrichten-Server sendet in Antwort auf die Anfrage des Benutzers eine Positiv- oder Negativ-Mitteilung über die Erreichbarkeit des/der Endgeräte(s), die von dem anfragenden Endgerät angewählt werden sollen, sofern diese anzuwählenden Endgeräte bei dem Nachrichten-Server registriert sind. Dies erfordert das separate Einrichten eines Nachrichten-Servers, und der Vorgang der Registrierungsanfrage erfordert eine separate Anwahl von Seiten des anfragenden Endgerätes.

Aus der WO 99/20032 A sind ein Verfahren nach dem Oberbegriff von Anspruch 1. und eine TK-Anlage zu dessen Durchführung bekannt.

Es liegt der vorliegenden Erfindung die Aufgabe zugrunde, ein Verfahren zum Betrieb einer IP-Telekommunikationsanlage, mit der Endgeräte verbunden sind, einfacher und schneller zu gestalten. Des weiteren liegt der vorliegenden Erfindung die Aufgabe zugrunde, eine IP-Telekommunikationsanlage zur Durchführung des Verfahrens zur Verfügung zu stellen.

Diese Aufgabe wird verfahrensseitig gemäß den Merkmalen des Anspruches 1 und vorrichtungsseitig gemäß den Merkmalen des Anspruches 13 gelöst.

Ein wesentlicher Punkt der Erfindung liegt darin, daß der Benutzer eines anfragenden Endgerätes eine Anfragenachricht nun direkt an eine IP-Telekommunikationsanlage, insbesondere eine IP-Telefonanlage, richten kann, um in Antwort auf eine derartige Anfragenachricht Kennzeichnungsdaten zu Telekommunikationsendgeräten zu erhalten, die in der Telefonanlage selber registriert sind. Somit erübrigt sich eine separate Anwahl eines Nachrichten-Servers.

Gemäß einer bevorzugten Ausführungsform werden die Daten zu den in der Telefonanlage registrierten Telefonendgeräten mittels einer RAS(Registration Access Status)-Meldung an das anfragende Endgerät zurückgesendet, wobei diese RAS-Meldung innerhalb separater Kanäle nach dem ITU-Standard H.245 in einem LAN oder WAN, das nach dem ITU-Standard H.323 arbeitet, übertragen werden können. H.323 ist ein Standard, der die Protokolle, Komponenten und Abläufe für Multimedia-Kommunikationsdienste über auf Internetprotokollen (IP) basierende Netzwerken spezifiziert.

In der an die IP-Telefonanlage gesendeten Anfragenachricht wird eine Obergrenze für die Anzahl der registrierten Endgeräte, deren Daten zurückgesendet werden sollen, vorbestimmt, so daß der Benutzer des anfragenden Endgerätes eine Vorauswahl nach bestimmten Kriterien, wie beispielsweise noch Ortsbereich oder Benutzernamen mit einem bestimmten Anfangsbuchstaben, treffen kann.

Um die Berechtigung eines anfragenden Endgerätes zur Durchführung einer Registrierungsabfrage innerhalb der Telefonanlage festzustellen, werden mit der Anfragenachricht Identifizierungsdaten (und wahlweise zusätzlich Authentisierungsdaten) zur Identifizierung des Endgerätes mitübertragen und in der Anlage mittels einer Identifizierungseinrichtung überprüft.

Alternativ zu der oben genannten RAS-Meldung können die Daten zu den registrierten Endgeräten auch mittels einer FACILIY-Meldung übertragen werden, wobei die Verarbeitung der Anfragenachricht und der darin enthaltenen Informationen sowie das Versenden der Kennzeichnungsdaten über die registrierten Endgeräte durch einen innerhalb der Telefonanlage eingerichteten Supplementary-Service durchgeführt wird.

Die Daten zu den in der Telefonanlage registrierten Endgeräten können alle zu den jeweiligen Benutzern der registrierten Endgerät verfügbaren Alias-Daten mit Ausnahme ihrer IP-Adresse und dem Port umfassen. Derartige Alias-Daten können beispielsweise der "Name" des auf den Benutzer registrierten Endgerätes, und zusätzliche Adreßangaben oder sonstige den Status des Endgerätes betreffende Vermerke sein. Insbesondere sind die Alias-Daten diejenigen Adreßangaben, die für das Anwählen des Endgerätes notwendig sind.

Sofern der Umfang der zurückzusendenden Daten den mit einer einzigen Meldung übertragbaren Datenumfang übersteigt, wird dies in einem Überlastvermerk, der zusammen mit den maximal übertragbaren Datenumfang zurückgesendet wird, dem anfragenden Endgerät angezeigt. Der Benutzer des Endgerätes kann dann entscheiden, ob er die restlichen noch nicht übertragenen Daten mittels weiterer Anfragen ebenso zurückgesendet bekommen möchte. Derartige Anfragenachrichten werden dann solange an die Anlage übertragen, bis von der Anlage eine Meldung ohne einen Überlastvermerk zurückgesendet wird.

Wenn in der Anlage ein Supplementary Service eingerichtet ist, welcher als Leistungsmerkmal die FACILITY-Meldung zum Zurücksenden der Daten verwendet, so wird das Versenden eines großen Datenumfangs, wozu mehrere Meldungen notwendig sind, automatisch als Sendevorgang auf mehreren Meldungen verteilt.

Gemäß einer Weiterbildung der Erfindung können Beendigungssteuerungsdaten von dem anfragenden Endgerät zu der Anlage zum Abbrechen des Anfragevorganges jederzeit gesendet werden. Die Beendigungsteuerungsdaten können durch Steuern einer Beendigungseinrichtung innerhalb der Anlage entweder den Anfragevorgang endgültig beenden oder einen Neustart des Anfragevorganges einleiten.

Die zur Durchführung des Verfahrens vorteilhaft ausgebildete IP-Telefonanlage umfaßt eine Auswerteeinrichtung zum Auswerten einer empfangenen Anfragenachricht und der darin enthaltenen zusätzlichen Daten, wie beispielsweise über die Obergrenze der Anzahl der Endgeräte, deren Daten zurückgesendet werden sollen. Über eine mit der Auswerteeinrichtung verbundene Steuereinrichtung kann auf einen Speicher für die Daten zu den registrierten Endgeräten und auf weitere Einrichtungen, wie eine Filtereinrichtung zum Auswählen gewünschter Speicherinhalte und eine Sortiereinrichtung zum Bestimmen der Reihenfolge der ausgelesenen Daten zurückgegriffen werden. Nachdem die ausgelesenen Daten mittels einer Überlast-Prüfeinrichtung dahingehend überprüft wurden, ob deren Umfang innerhalb einer einzigen Meldung übertragbar ist, werden die Daten an das anfragende Endgerät gesendet und ggf. sich aus dem Überlast-Prüfvorgang ergebende Restdaten in einem Zwischenspeicher zwischengespeichert. Dieser Zwischenspeicher kann anschließend nach Empfang einer weiteren Anfragenachricht für einen weiteren Sendevorgang ausgelesen werden.

Weitere Vorteile und Zweckmäßigkeiten ergeben sich aus den Unteransprüchen sowie der nachfolgenden Beschreibung in Verbindung mit den Zeichnungen. Hierbei zeigen:
- Figur 1a und 1b: eine Ausführungsform des erfindungsgemäßen Verfahrens, und
- Figur 2: ein Funktions-Blockschaltbild gemäß einer Ausführungsform einer Telekommunikationsanlage zur Durchführung des Verfahrens.

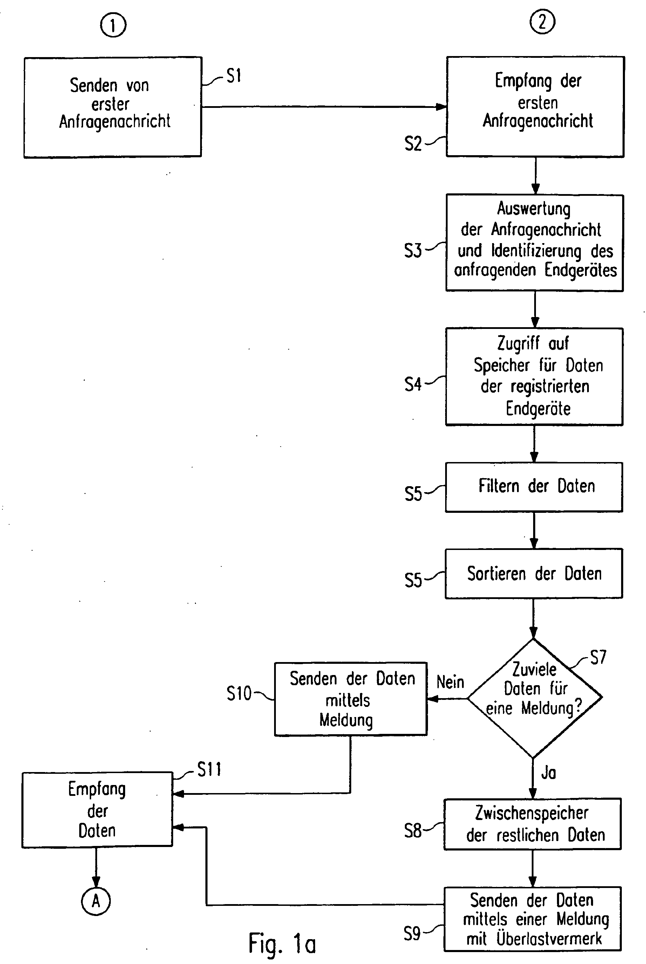

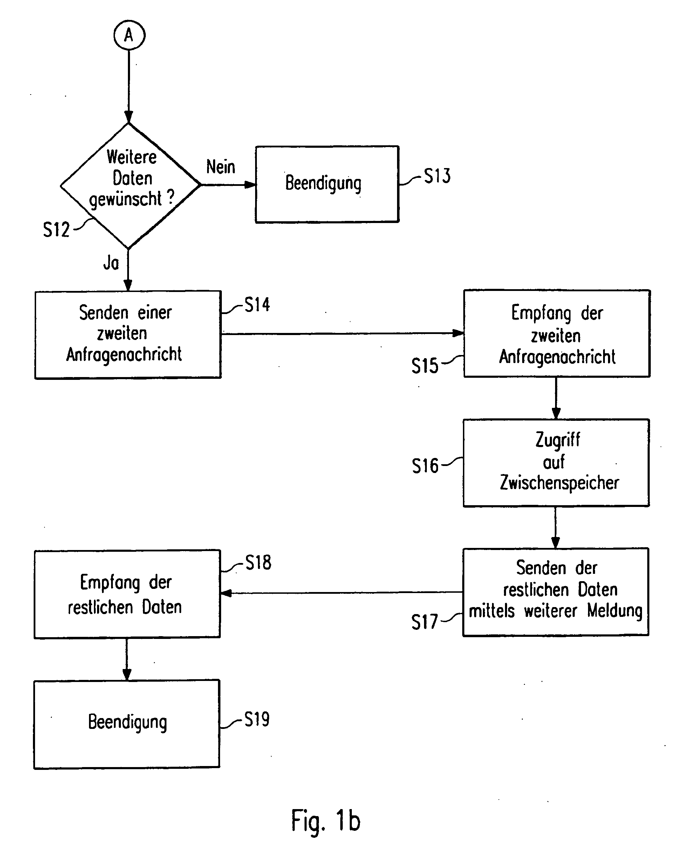

Die Figuren 1a und 1b zeigen eine Ausführungsform des erfindungsgemäßen Verfahrens, das zwischen einem anrufenden IP-Endgerät 1 und einer angerufenen IP-Telefonanlage (IP-PBX) 2 abläuft. In einem Schritt S1 sendet das Endgerät eine erste Anfragenachricht mit Identifizierungsdaten, Filter- und Sortiersteuerungsdaten an die Anlage 2, welche die Anfragenachricht in einem Schritt S2 empfängt. Gemäß dem Schritt S3 wird eine Auswertung der Anfragenachricht durch Analyse der mit der Anfragenachricht übertragenen weiteren Daten durchgeführt. Weiterhin wird in einem Identifizierungsvorgang festgestellt, ob das anfragende Endgerät zu einer Registrierungsabfrage berechtigt ist.

Sofern in dem Schritt S3 festgestellt worden ist, daß es sich bei dem Endgerät um ein für die Abfrage berechtigtes Endgerät handelt, wird auf einen Speicher für Daten von registrierten Telekommunikationsendgeräten in einem Schritt S4 zugegriffen. Die ausgelesenen Daten werden in den Schritten S5 und S6 entsprechend der Filtersteuerungsdaten bzw. Sortiersteuerungsdaten ausgewählt und die Reihenfolge ihrer Auflistung bestimmt.

Der Schritt S7 beschreibt eine Überlast-Prüfung, mittels welcher festgestellt wird, ob der zu sendende Datenumfang den maximal übertragbaren Datenumfang innerhalb einer einzigen Meldung übersteigt. Sofern dies der Fall ist, werden die restlichen Daten, welche nicht mit dieser ersten Meldung übertragen werden können, zwischengespeichert (Schritt S8) und die mit der ersten Meldung zu übertragenden Daten inklusive eines Überlastvermerkes in einem Schritt S9 an das Endgerät 1 gesendet und dort empfangen (Schritt S11). Sofern die Überlast-Prüfung ergab, daß sämtliche zu sendenden Daten innerhalb einer Meldung gesendet werden können, werden diese in einem Schritt S10 mittels der Meldung, beispielsweise vom RAS, an das Endgerät 1 zurückgesendet.

An dem Endgerät 1 wird in einem Schritt S12 der Benutzer nach Empfang des ersten Datensatzes gefragt, ob er das Übertragen weiterer Daten wünscht oder nicht. Abhängig davon, ob der Benutzer die gewünschten Daten in dem bereits übertragenen Datensatz findet, veranlaßt er eine Beendigung des Anfragevorganges (Schritt S13) oder dem Senden einer zweiten Anfragenachricht (Schritt S14). Nach Empfang dieser zweiten Anfragenachricht (Schritt S15) greift die Anlage 2 auf den Zwischenspeicher zu (Schritt S16), um diesen auszulesen. Die ausgelesenen restlichen Daten (weiterer Datensatz) werden in den Schritten S17 und S18 an das Endgerät 1 übertragen. Dieser Anfragevorgang wird solange wiederholt, bis die Meldung mittels welcher die Datensätze an die Endgeräte gesendet werden, keine Überlastvermerke mehr beinhalten. Für diesen Fall beendet der Benutzer des Endgerätes 1 in einem Schritt S19 den Anfragevorgang.

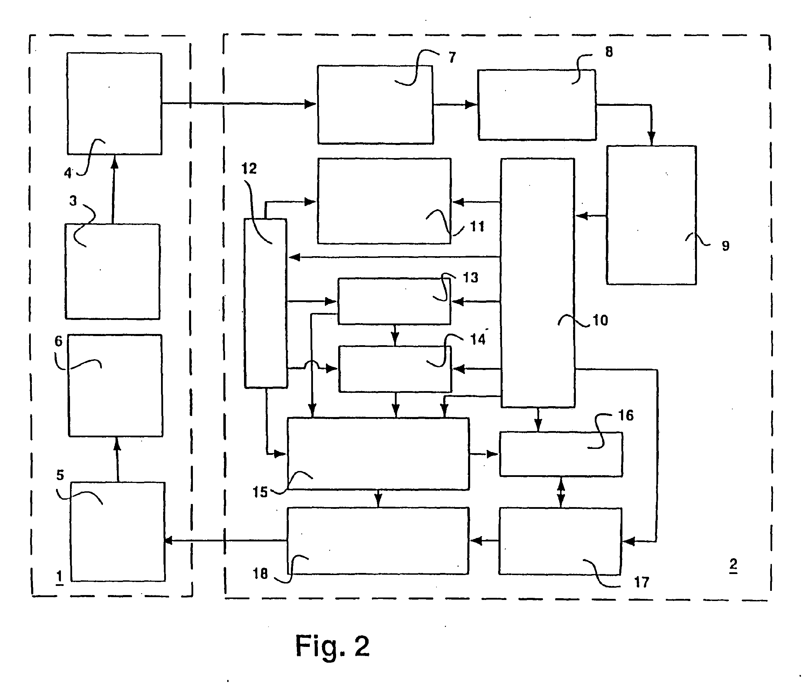

Figur 2 zeigt ein stark vereinfachtes Funktions-Blockschaltbild einer erfindungsgemäß IP-Telekommunikationsanlage 2, welche mit dem Endgerät 1 verbunden ist. Zur Durchführung eines Anfragevorganges umfaßt das Endgerät 1 eine Betätigungseinrichtung zum Starten des Anfragevorganges, welche mit einer Sendeeinrichtung 4 zum Übertragen einer Anfragenachricht verbunden ist. Des weiteren ist eine Empfangseinrichtung 5, welche mit einer Anzeigevorrichtung 6 verbunden, zum Empfang versendeter Daten zu den registrierten Endgeräten und zum Anzeigen dieser Daten vorgesehen.

Die Anlage 2 beinhaltet eine Empfangseinrichtung 7 zum Empfangen der übertragenen Anfragenachrichten, eine damit verbundene Identifizierungseinrichtung 8 zur Überprüfung einer Berechtigung und eine Auswerteeinrichtung 9 zum Auswerten der mit der Anfragenachricht übertragenen Daten. Die Auswerteeinrichtung 9 ist mit einer Steuereinrichtung 10 verbunden, welche wiederum mit einem Speicher 11 für Daten der registrierten Endgeräte, einer Filtereinrichtung 13 zum Auswählen bestimmter Daten und einer Sortiereinrichtung 14 zum Auflisten der ausgelesenen Daten in einer vorbestimmten Reihenfolge zu deren Steuerung verbunden ist. Eine Leseeinrichtung 12 ist zwischen dem Speicher 11 und der Filtereinrichtung 13 bzw. der Sortiereinrichtung 14 angeordnet.

Eine Überlast-Prüfeinrichtung 15 zum Überprüfen einer Überlasterscheinung ist zwischen der Leseeinrichtung 12 - bzw. der Filtereinrichtung 13 und der Sortiereinrichtung 14, sofern deren Funktionen benötigt werden - und einem Zwischenspeicher 16 angeordnet. Der Zwischenspeicher 16 zur Aufnahme von Restdaten ist mit einer Leseeinrichtung 17 und einer Sendeeinrichtung 18, die ebenso mit der Überlast-Prüfeinrichtung 15 direkt verbunden, in Kontakt.

Wenn der Benutzer des Endgerätes 1 für eine Registrierungsabfrage das Senden einer Anfragenachricht wünscht, so startet er den Anfragevorgang durch Betätigen der Betätigungseinrichtung 3, die ein Softkey an einem Telefon oder eine Option in einem Software-Menü innerhalb eines PC's sein kann. Die Anfragenachricht wird mittels der Sendeeinrichtung 4 und der Empfangseinrichtung 7 an die Anlage 2 übertragen. Identifizierungsdaten, die mit der Anfragenachricht mitgesendet wurden, werden in der Identifizierungseinrichtung 8 mit abgespeicherten Daten verglichen, um eine Berechtigung zur Durchführung einer Anfragenachricht festzustellen.

Sofern eine derartige Berechtigung vorliegt, wird in der Auswerteeinrichtung 9 die Anfragenachricht bzgl. ihrer weiteren Daten ausgewertet. Hierfür wird festgestellt, ob mit der Anfragenachricht Filtersteuerungsdaten und Sortiersteuerungsdaten zum Steuern der Filtereinrichtung 13 und der Sortiereinrichtung 14 mitgesendet wurden und ein entsprechendes Signal an die Steuereinrichtung 10 zum Ansteuern der Filtereinrichtung 13 bzw. der Sortiereinrichtung 14 weitergegeben. Des weiteren wird in der Auswerteeinrichtung 9 festgestellt, welche Obergrenze die Anzahl der Einträge (registrierte Endgeräte), deren Daten versandt werden soll, von dem Benutzer des Endgerätes 1 gewünscht ist. Sowohl die Daten über die Obergrenze der Anzahl von Einträgen als auch die Identifizierungsdaten sind Muß-Angaben (Mandatory), wohingegen die Filtersteuerungsdaten optionär nahe Angaben darstellen.

Die Steuereinrichtung 10 bewirkt einen Zugriff auf den Speicher 11 und eine Ansteuerung der Leseeinrichtung 12, mittels derer die Daten der registrierten Endgeräte in gewünschter Anzahl aus dem Speicher 11 ausgelesen werden. Die Leseeinrichtung 12 gibt die ausgelesenen Daten an die Filtereinrichtung 13 weiter, die, gesteuert durch die Steuereinrichtung 10, aus den ausgelesenen Daten bestimmte Benutzergruppen oder Alias-Daten gemäß den übertragenen Filtersteuerungssignalen auswählt. Die Sortiereinrichtung 14 erhält anschließend die ausgewählten Daten zur Auflistung derjenigen in einer gewünschten Reihenfolge gemäß der übertragenen Sortiersteuerungsdaten.

Die sortierten und gefilterten Daten werden dann von der Überlast-Prüfeinrichtung 15 in ihrem Umfang auf eine mögliche Übertragung innerhalb einer einzigen Meldung überprüft und an die Sendeeinrichtung 18 weitergegeben, sofern die Prüfung eine mögliche Übertragung innerhalb einer einzigen Meldung ergab. Die Sendeeinrichtung 18 sendet die Daten an die Empfangseinrichtung 5 des Endgerätes 1, worin die Daten auf der Anzeigevorrichtung 6 dem Benutzer angezeigt werden.

Für den Fall, daß die Prüfeinrichtung 15 festgestellt hat, daß der Umfang der zurückzusendenden Daten den maximal übertragbaren Datenumfang innerhalb einer einzigen Meldung übersteigt, wird ein erster Datensatz an die Sendeeinrichtung 18 zusammen mit einem Überlast-Vermerk an das Endgerät 1 direkt weitergegeben, und weitere Datensätze werden an den Zwischenspeicher 16 weitergeleitet. Sofern der Benutzer des Endgerätes 1 nach Lesen des Überlast-Vermerks auf der Anzeigevorrichtung 6 sich dazu entscheidet, weitere Datensätze erhalten zu wollen, sendet er mittels der Betätigungseinrichtung 3 und der Sendeeinrichtung 4 eine weitere Anfragenachricht an die Anlage 2. Die Anfragenachricht enthält in diesem Fall die Indentifizierungsdaten und dem Überlast-Vermerk der Anlage 2 entsprechenden Angaben. Diese Daten bzw. Angaben werden wiederum in der Auswerteeinrichtung 9 ausgewertet. Anschließend steuert die Steuereinrichtung 10 aufgrund der festgestellten Angaben bzgl. der Überlastung die Leseeinrichtung 17 zum Auslesen eines weiteren Datensatzes aus dem Zwischenspeicher 16. Dieser Datensatz wird dann über die Sendeeinrichtung 18 an die Empfangseinrichtung 5 übertragen. Ein Überlast-Vermerk wird über die angesteuerte Überlast-Prüfeinrichtung 15 diesem weiteren Datensatz hinzufügt, sofern weitere Datensätze in dem Zwischenspeicher 16 noch vorhanden sind. Dieser Ablauf der nochmaligen Anfrage kann solange wiederholt werden, bis auf der Anzeigevorrichtung 6 kein Überlast-Vermerk mehr angezeigt wird.

An dieser Stelle sei darauf hingewiesen, daß alle oben beschriebenen Teile für sich allein gesehen und in jeder Kombination, insbesondere die in der Zeichnung dargestellten Details als erfindungswesentlich beansprucht werden. Abänderungen hiervon sind dem Fachmann geläufig.

### Bezugszeichenliste

- 1: Anfragendes Endgerät
- 2: Telekommunikationsanlage
- 3: Betätigungseinrichtung
- 4: Sendeeinrichtung
- 5: Empfangseinrichtung
- 6: Anzeigevorrichtung
- 7: Empfangseinrichtung
- 8: Identifizierungseinrichtung
- 9: Auswerteeinrichtung
- 10: Steuereinrichtung
- 11: Speicher für Daten zu den registrierten Endgeräten
- 12: Leseeinrichtung
- 13: Filtereinrichtung
- 14: Sortiereinrichtung
- 15: Überlast-Prüfeinrichtung
- 16: Zwischenspeicher für Daten
- 17: Leseeinrichtung
- 18: Sendeeinrichtung
- S1: Senden einer ersten Anfragenachricht
- S2: Empfangen der ersten Anfragenachricht
- S3: Auswertung der Anfragenachricht und Identifizierung des anfragenden Endgerätes
- S4: Zugriff auf Speicher
- S5: Filtern der Daten
- S6: Sortieren der Daten
- S7: Überprüfung des Datenumfanges
- S8: Zwischenspeichern der restlichen Daten
- S9: Senden der Daten mittels einer Meldung mit Überlastvermerk
- S10: Senden der Daten mittels Meldung
- S11: Empfang der Daten
- S12: Abfrage des Wunsches von weiteren Daten
- S13: Beendigung des Anfragevorganges
- S14: Senden einer zweiten Anfragenachricht
- S15: Empfang der zweiten Anfragenachricht
- S16: Zugriff auf Zwischenspeicher
- S17: Senden der restlichen Daten mit weiterer Meldung
- S18: Empfang der weiteren Daten
- S19: Beendigung des Anfragevorgangs

## Patentansprüche

1. Verfahren zum Betrieb einer Telekommunikationsanlage (2) für die IP-Telefonie, wobei
die IP-Telekommunikationsanlage (2) in Antwort auf eine empfangene Anfragenachricht (S2, S15) mittels einer Meldung Kennzeichnungsdaten, zu in der Telekommunikationsanlage (2) registrierten Telekommunikationsendgeräten an ein anfragendes Telekommunikationsendgerät (1) zurücksendet (S9, S10, S17),
**dadurch gekennzeichnet, dass**
mit der Anfragenachricht eine Obergrenze für die Anzahl der registrierten Telekommunikationsendgeräte, deren Kennzeichnungsdaten zurückgesendet werden, vorbestimmt wird.

2. Verfahren nach Anspruch 1,
**dadurch gekennzeichnet, dass**
mit der Anfragenachricht Identifizierungsdaten zur Identifizierung des anfragenden Telekommunikationsendgerätes (1) und/oder Authentisierungsdaten übertragen werden.

3. Verfahren nach einem der Ansprüche 1 oder 2,
**dadurch gekennzeichnet, dass**
mit der Anfragenachricht Filtersteuerungsdaten zum Auswählen (S5) einer Teilmenge der in der Telekommunikationsanlage (2) registrierten Telekommunikationsendgeräte, deren Daten zurückgesendet werden, übertragen werden.

4. Verfahren nach einem der vorangegangenen Ansprüche,
**dadurch gekennzeichnet, dass**
mit der Anfragenachricht Sortiersteuerungsdaten zum Sortieren (S6) der Daten der registrierten Telekommunikationsendgeräte übertragen werden.

5. Verfahren nach einem der vorangegangenen Ansprüche,
**dadurch gekennzeichnet, dass**
mindestens eine weitere Anfragenachricht von dem anfragenden Telekommunikationsendgerät (1) zu der Telekommunikationsanlage (2) gesendet wird (S14), wenn der Umfang der zurückzusendenden Daten den mit einer einzigen Meldung übertragbaren Datenumfang übersteigt.

6. Verfahren nach Anspruch 5,
**dadurch gekennzeichnet, dass**
bei zu großem Datenumfang mit der Meldung ein Uberlastvermerk an das Telekommunikationsendgerät (1) zurückgesendet wird (S9).

7. Verfahren nach Anspruch 5 oder 6,
**dadurch gekennzeichnet, dass**
in Antwort auf die weitere Anfragenachricht der restliche Kennzeichnungsdatenumfang zurückgesendet wird (S17).

8. Verfahren nach Anspruch 7,
**dadurch gekennzeichnet, dass**
mit den weiteren Anfragenachrichten Identifizierungsdaten und der Überlastvermerk übertragen werden.

9. Verfahren nach einem der vorangegangenen Ansprüche,
**dadurch gekennzeichnet, dass**
durch Übertragung von Beendigungssteuerungsdaten von dem anfragenden Telekommunikationsendgerät (1) zu der Telekommunikationsanlage (2) der Anfragevorgang abgebrochen wird.

10. Verfahren nach Anspruch 9,
**dadurch gekennzeichnet, dass**
nach der Übertragung der Beendigungssteuerungsdaten ein neuer Anfragevorgang gestartet wird.

11. Verfahren nach einem der vorangegangenen Ansprüche,
**dadurch gekennzeichnet, dass**
die Meldung eine RAS-Meldung ist.

12. Verfahren nach einem der Ansprüche 1 bis 10,
**dadurch gekennzeichnet, dass**
die Meldung vom Typ FACILITY ist.

13. Telekommunikationsanlage für IP-Telefonie zur Durchführung des Verfahrens nach einem der vorangegangenen Ansprüche, mit
- einer Auswerteeinrichtung (9) zur Auswertung einer Anfragenachricht eines anfragenden Telekommunikationsendgerätes (1) zur Abfrage von Kennzeichnungsdaten von in der Telekommunikationsanlage (2) registrierten Telekommunikationsendgeräten, unter Auswertung einer mit der Anfragenachricht vorbestimmten Obergrenze für die Anzahl der Telekommunikationsendgeräte, deren Kennzeichnungsdaten zurückgesendet werden,
- einen Speicher (11) für die Kennzeichnungsdaten,
- Einrichtungen (10, 12) zum Zugreifen der in dem Speicher (11) gespeicherten Kennzeichnungsdaten, und
- einer Sendeeinrichtung (18) zum Senden der Kennzeichnungsdaten in Antwort auf die empfangene Anfragenachricht.

14. Telekommunikationsanlage nach Anspruch 13,
**gekennzeichnet durch**
eine Filtereinrichtung (13) zum Auswählen einer Teilmenge aus den im Speicher (11) abgespeicherten Kennzeichnungsdaten.

15. Telekommunikationsanlage nach Anspruch 13 oder 14,
**gekennzeichnet durch**
eine Sortiereinrichtung (14) zum Sortieren der ausgelesenen Kennzeichnungsdaten.

16. Telekommunikationsanlage nach einem der Ansprüche 13 bis 15,
**gekennzeichnet durch**
eine Last-Prüfeinrichtung (15) zum Feststellen der ausgelesenen Datenmenge und zum Vergleichen der ausgelesenen mit der maximal mittels einer Meldung übertragbaren Datenmenge und eine Abbruch-Steuereinrichtung zum Bewirken eines Abbruchs des Sendens bei Erreichen der maximal übertragbaren Datenmenge.

17. Telekommunikationsanlage nach Anspruch 16,
**gekennzeichnet durch**
einen Zwischenspeicher (16) zum Abspeichern einer nicht gesendeten Rest-Datenmenge.

## Claims

1. Method for operating a PBX system (2) for IP telephony, whereby,
in response to a received enquiry message (S2, S15), the IP PBX system (2) transmits back (S9, S10, S17) identification data relating to telecommunications terminals registered in the PBX system (2) by means of a message to an enquiring telecommunications terminal (1),
**characterized in that**
an upper limit for the number of registered telecommunications terminals whose identification data are transmitted back is predefined with the enquiry message.

2. Method according to Claim 1,
**characterized in that**
identification data to identify the enquiring telecommunications terminal (1) and/or authentication data are transmitted with the enquiry message.

3. Method according to one of Claims 1 or 2,
**characterized in that**
filter control data to select (S5) a subset of the telecommunications terminals registered in the PBX system (2) whose data are transmitted back are transmitted with the enquiry message.

4. Method according to one of the preceding claims,
**characterized in that**
sorting control data to sort (S6) the data of the registered telecommunications terminals are transmitted with the enquiry message.

5. Method according to one of the preceding claims,
**characterized in that**
at least one further enquiry message is transmitted (S14) from the enquiring telecommunications terminal (1) to the PBX system (2) if the scope of the data to be transmitted back exceeds the data scope which can be transmitted with a single message.

6. Method according to Claim 5,
**characterized in that**,
in the event of excessive data scope, an overload indicator is transmitted back (S9) with the message to the telecommunications terminal (1).

7. Method according to Claim 5 or 6,
**characterized in that**
the remaining identification data scope is transmitted back (S17) in response to the further enquiry message.

8. Method according to Claim 7,
**characterized in that**
identification data and the overload indicator are transmitted with the further enquiry messages.

9. Method according to one of the preceding claims,
**characterized in that**
the enquiry procedure is terminated by the transmission of termination control data from the enquiring telecommunications terminal (1) to the PBX system (2).

10. Method according to Claim 9,
**characterized in that**
a new enquiry procedure is started following the transmission of the termination control data.

11. Method according to one of the preceding claims,
**characterized in that**
the message is an RAS message.

12. Method according to one of Claims 1 to 10,
**characterized in that**
the message is of the FACILITY type.

13. PBX system for IP telephony to carry out the method according to one of the preceding claims, with
- an evaluation device (9) to evaluate an enquiry message of an enquiring telecommunications terminal (1) to read identification data of telecommunications terminals registered in the PBX system (2), by evaluating an upper limit predefined with the enquiry message for the number of telecommunications terminals whose identification data are transmitted back,
- a memory (11) for the identification data,
- devices (10, 12) to access the identification data stored in the memory (11), and
- a transmission device (18) to transmit the identification data in response to the received enquiry message.

14. PBX system according to Claim 13,
**characterized by**
a filter device (13) to select a subset from the identification data stored in the memory (11).

15. PBX system according to Claim 13 or 14,
**characterized by**
a sorting device (14) to sort the identification data which are read out.

16. PBX system according to one of Claims 13 to 15,
**characterized by**
a load-checking device (15) to determine the data volume read out and to compare the data volume read out with the maximum data volume which can be transmitted by means of a message, and a termination control device to effect a termination of the transmission if the maximum data volume which can be transmitted is reached.

17. PBX system according to Claim 16,
**characterized by**
a buffer memory (16) to store a residual data volume which is not transmitted.

## Revendications

1. Procédé d'exploitation d'une installation de télécommunication (2) pour la téléphonie IP,
dans lequel, en réponse à un message de demande reçu (S2, S15), l'installation de télécommunication IP (2) renvoie (S9, S10, S17) à un terminal de télécommunication demandeur (1), au moyen d'un message, des données de caractérisation pour des terminaux de télécommunication enregistrés dans l'installation de télécommunication (2),
**caractérisé par le fait que**, avec le message de demande, une limite supérieure est spécifiée pour le nombre des terminaux de télécommunication enregistrés dont les données de caractérisation sont renvoyées.

2. Procédé selon la revendication 1,
**caractérisé par le fait que**, avec le message de demande, on transmet des données d'identification pour l'identification du terminal de télécommunication demandeur (1) et/ou des données d'authentification.

3. Procédé selon la revendication 1 ou 2,
**caractérisé par le fait que**, avec le message de demande, on transmet des données de commande de filtrage pour la sélection (S5) d'un sous-ensemble des terminaux de télécommunication qui sont enregistrés dans l'installation de télécommunication (2) et dont les données sont renvoyées.

4. Procédé selon l'une des revendications précédentes,
**caractérisé par le fait que**, avec le message de demande, on transmet des données de commande de tri pour le tri (S6) des données des terminaux de télécommunication enregistrés.

5. Procédé selon l'une des revendications précédentes,
**caractérisé par le fait qu'**au moins un autre message de demande est envoyé (S14) par le terminal de télécommunication demandeur (1) à l'installation de télécommunication (2) lorsque le volume des données à renvoyer dépasse le volume de données transmissible avec un seul message.

6. Procédé selon la revendication 5,
**caractérisé par le fait que**, en présence d'un trop grand volume de données, une note de surcharge est renvoyée (S9) avec le message au terminal de télécommunication (1).

7. Procédé selon la revendication 5 ou 6,
**caractérisé par le fait que**, en réponse à l'autre message de demande, on renvoie (S17) le volume de données de caractérisation restant.

8. Procédé selon la revendication 7,
**caractérisé par le fait que**, avec les autres messages de demande, on transmet des données d'identification et la note de surcharge.

9. Procédé selon l'une des revendications précédentes,
**caractérisé par le fait que**, par la transmission de données de commande de clôture du terminal de télécommunication demandeur (1) à l'installation de télécommunication (2), on interrompt l'opération de demande.

10. Procédé selon la revendication 9,
**caractérisé par le fait que**, après la transmission des données de commande de clôture, on démarre une nouvelle opération de demande.

11. Procédé selon l'une des revendications précédentes,
**caractérisé par le fait que** le message est un message RAS.

12. Procédé selon l'une des revendications 1 à 10,
**caractérisé par le fait que** le message est du type FACILITY.

13. Installation de télécommunication pour téléphonie IP pour la mise en oeuvre du procédé selon l'une des revendications précédentes, avec
- un dispositif d'évaluation (9) pour l'évaluation d'un message de demande d'un terminal de télécommunication demandeur (1) en vue de l'interrogation de données de caractérisation de terminaux de télécommunication enregistrés dans l'installation de télécommunication (2), avec évaluation d'une limite supérieure spécifiée avec le message de demande pour le nombre des terminaux de télécommunication dont les données de caractérisation sont renvoyées,
- une mémoire (11) pour les données de caractérisation,
- des dispositifs (10, 12) pour l'accès aux données de caractérisation mémorisées dans la mémoire (11), et
- un dispositif d'émission (18) pour l'émission des données de caractérisation en réponse au message de demande reçu.

14. Installation de télécommunication selon la revendication 13,
**caractérisée par** un dispositif de filtrage (13) pour la sélection d'un sous-ensemble des données de caractérisation mémorisées dans la mémoire (11).

15. Installation de télécommunication selon la revendication 13 ou 14,
**caractérisée par** un dispositif de tri (14) pour le tri des données de caractérisation lues.

16. Installation de télécommunication selon l'une des revendications 13 à 15,
**caractérisée par** un dispositif de vérification de charge (15) pour déterminer la quantité de données lue et pour comparer la quantité de données lue à la quantité de données maximale transmissible au moyen d'un message et par un dispositif de commande d'interruption pour provoquer une interruption de l'émission lorsque la quantité de données maximale transmissible est atteinte.

17. Installation de télécommunication selon la revendication 16,
**caractérisée par** une mémoire intermédiaire (16) pour mémoriser une quantité de données restante non envoyée.
